# EUROPÄISCHE PATENTSCHRIFT

(11) **EP 3 390 851 B1**
(45) Veröffentlichungstag und Bekanntmachung des Hinweises auf die Patenterteilung: **09.10.2019**
(21) Anmeldenummer: 16801195.5
(22) Anmeldetag: 24.11.2016
(51) Int. Cl.: F16D 33/20

(54) **DIE ERFINDUNG BETRIFFT EINE HYDRODYNAMISCHE KUPPLUNG UND EIN VERFAHREN ZUM BETREIBEN EINER HYDRODYNAMISCHEN KUPPLUNG**
THE INVENTION RELATES TO A HYDRODYNAMIC COUPLING AND TO A METHOD FOR OPERATING A HYDRODYNAMIC COUPLING
ACCOUPLEMENT HYDRODYNAMIQUE ET PROCÉDÉ DE FONCTIONNEMENT DE CELUI-CI

(30) Priorität: 16.12.2015 DE 102015225399
(43) Veröffentlichungstag der Anmeldung: 24.10.2018
(73) Patentinhaber: Voith Patent GmbH, 89522 Heidenheim (DE)
(72) Erfinder: HOFFELD, Harald, 74564 Crailsheim (DE)
(86) Internationale Anmeldenummer: PCT/EP2016/078614
(87) Internationale Veröffentlichungsnummer: WO 2017/102276

(56) Entgegenhaltungen:
- DE-A1- 10 353 518
- DE-A1-102004 001 047
- DE-A1-102013 214 077
- GB-A- 2 118 692
- US-A- 3 831 378

## Beschreibung

Hydrodynamische Kupplungen enthalten zwei umlaufende Schaufelräder, die als Pumpenrad und Turbinenrad oder auch als Primärrad und Sekundärrad bezeichnet werden. Unter Vernachlässigung von minimalen Verlustmomenten durch Luftreibung oder Dichtelemente sind die hydrodynamischen Drehmomente an Pumpe und Turbine vom Betrag her gleich. Das Betriebsmedium strömt von dem Pumpenrad direkt in das Turbinenrad und von dem Turbinenrad wieder zurück in das Pumpenrad. Es gibt keine weiteren Elemente, an denen sich ein Drehmoment abstützen kann. Durch die Form und die Anzahl und die Ausrichtung der vorgesehenen Schaufeln des Pumprades und die Anzahl und die Form und die Ausrichtung der vorgesehenen Schaufeln des Turbinenrades wird die Strömung des Strömungsmediums beeinflusst.

Pumpenrad und Turbinenrad werden auch als beschaufelte Laufräder bezeichnet. Die Laufräder können mit schräger Beschaufelung oder mit gerader Beschaufelung versehen sein.

So sind zum Beispiel die als T-Kupplung bezeichnete Kupplungen mit gerader Beschaufelung z.B. aus dem Firmenprospekt "Proven a Million Times - Fluid Couplings with Constant Fill" bekannt. Diese hydrodynamischen Kupplungen übertragen die eingeleitete mechanische Leistung über einen Flüssigkeitsstrom auf die Arbeitsmaschine. Dies erfolgt durch die zwei sich gegenüberstehenden Schaufelräder. Das Pumpenrad ist mit dem Motor verbunden und wirkt wie eine Kreiselpumpe. Das Turbinenrad ist mit der Arbeitsmaschine verbunden und wirkt wie eine Turbine. Je mehr Füllung sich im Arbeitsraum der Kupplung befindet, desto größer ist die übertragene Leistung. Durch die mechanische Trennung von Antriebs- und Abtriebsseite übertragen hydrodynamische Kupplungen die Leistung verschleißfrei und dämpfen gleichzeitig Drehschwingungen und Drehmomentstöße im Antriebsstrang. Diese T-Kupplung ist eine konstant gefüllte Kupplung. Konstant gefüllte Kupplungen sind in sich geschlossene Antriebskomponenten. Die verschiedenen Typen von konstant gefüllten Kupplungen unterscheiden sich hauptsächlich durch Nebenräume, deren automatisch gesteuerte Befüllung und Entleerung einen maßgeblichen Einfluss auf das Anfahrverhalten hat. Antriebstechnische Anforderungen bestimmen den Kupplungstyp und die Füllmenge. Konstant gefüllte Kupplungen finden ihren Einsatz hauptsächlich zum Anfahren, zur Drehmomentbegrenzung und zur Beeinflussung des Drehschwingungsverhaltens des Antriebsstrangs.

Darüber hinaus sind noch Kupplungen mit veränderlicher Füllmenge bekannt. Diese werden z.B. in dem Voith Firmenprospekt "Hydrodynamische Kupplungen: Grundlagen, Merkmale und Vorteile" als Stellkupplungen und Schaltkupplungen bezeichnet, beschrieben.

Aus der US 3,831,378 ist eine hydrodynamische Kupplung bekannt durch die Formgestaltung des Pumpen- und Turbinennrades die Fluidströmung zu gestalten. Aus dieser Schrift ist es bekannt durch in den Strömungskreislauf zwischen Turbinenrad und Pumpenrad einschiebbaren Ring den Strömungskreislauf zu blockieren.

Aus der DE 10 2004 001 047 A1 ist eine hydrodynamische Maschine mit einem Pumpenrad und einem Turbinenrad bekannt. Diese Schrift befasst sich mit der Problematik einer sprunghaften Veränderung des übertragbaren Drehmomentes beim Durchfahren des gesamten Drehzahlverhältnisses zwischen Pumpen und Turbinenrad. Aus dieser Schrift ist es bekannt die Schaufelkante des Pumpenrades gezackt, kammartig, mäanderförmig, sägezahnartig oder wellenförmig zu gestalten. Auch ist es bekannt eine speziell zur Drehrichtung ausgerichtete Schaufelvorderkantengestaltung durch einseitige Anspritzung oder enge Verrundung bei einem oder beiden Schaufelrädern für einen sanften Drehmoment-Schlupf Verlauf vorzusehen. Darüber hinaus ist es bekannt nur den radial inneren Bereich des Pumpenrades mit einem gezackten Verlauf zu versehen. Das ist der Bereich in dem Betriebsflüssigkeit von dem Turbinenrad wieder ins Pumpenrad eintritt.

Aus der De 103 53 518 A1 ist ein Verfahren zur Reduzierung des aufnehmbaren Momentes einer hydrodynamischen Kupplung im Bereich hohen Schlupfes bekannt. Es ist die Anordnung einer Drosselscheibe im Bereich der Trennebene am oder im Pumpenrad oder am oder im Turbinenrad vorgesehen.

Aus der DE 10 2013 214 077 A1 ist ein Redarder bekannt. Ein Retarder weist einen Rotor und einen Stator auf. Diese Schrift befasst sich mit der Formgestaltung der Schaufeln des Rotors zur Reduzierung der Herstellkosten und des Wirkungsgrades. Dabei ist die Vorderkante des Rotors mit einem Radius RK ausgebildet der großer ist als der Radius RA der Schaufel. Entlang dieses Radius RA werden die Schaufeln mit einem Grundkörper fest verbunden.

Die GB 2 118 692 A offenbart eine hydrodynamische Maschine als Anfahrkupplung oder als Schwingungsdämpfer. Bei der in Fig. 4 gezeigten Ausführung ist eine Leitplatte vorgesehen.

Der Erfindung lag die Aufgabe zugrunde eine hydrodynamische Kupplung und ein Verfahren zum Betrieb einer hydrodynamischen Kupplung mit einer besseren Strömungsführung bereitzustellen..

Durch die Reduzierung von Strömungsverlusten und Stoßverlusten kann der Wirkungsgrad der hydrodynamischen Kupplung erhöht werden.

Weiterhin konnten die Strömungsgeräusche verringert werden. Die Strömungsgeräusche sind etwa proportional zu den Verlusten.

Die erfindungsgemäße Lösung ist durch die Merkmale der unabhängigen Ansprüche charakterisiert. Vorteilhafte Ausgestaltungen sind in den Unteransprüchen wiedergegeben.

Die Erfindung betrifft eine hydrodynamische Kupplung. Die hydrodynamische Kupplung weist ein Pumpenrad als erstes Schaufelrad und ein Turbinenrad als zweites Schaufelrad auf. Durch das Pumpenrad und das Turbinenrad wird ein hydrodynamischer Kreis gebildet. In dem hydrodynamischen Kreis können noch weitere Elemente, wie z.B. ein weiteres Schaufelrad enthalten sein. Das Pumpenrad umfasst einen Grundkörper und Pumpenradschaufeln. Die Pumpenradschaufeln sind mit dem Grundkörper des Pumpenrades verbunden. Das Turbinenrad umfasst einen Grundkörper des Turbinenrades und Turbinenradschaufeln. Die Turbinenradschaufeln sind mit dem Grundkörper des Turbinenrades verbunden. Das Pumpenrad ist um eine Mittenachse, auch als Antriebsachse bezeichnet, drehbar gelagert. Das Turbinenrad ist um eine Mittenachse drehbar gelagert. Die Mittenachse des Turbinenrades wird auch als Abtriebsachse bezeichnet. Die Schaufeln des Pumpenrades weisen Begrenzungskanten auf, die den Begrenzungskanten der Schaufeln des Turbinenrades zugewandt angeordnet sind.

Die Erfindung zeichnet sich durch die Ausgestaltung von Schaufeln eines Schaufelrades aus. Von einem Schaufelrad ist mindestens eine der Schaufeln mit einer Begrenzungskante versehen, wobei die Begrenzungskante in einen ersten Abschnitt und in einen zweiten Abschnitt unterteilt ist. In dem ersten Abschnitt ist die Begrenzungskante mit einer ersten Kantenkontur versehen und in dem zweiten Abschnitt ist die Begrenzungskante mit einer zweiten Kantenkontur versehen. Die erste Kantenkontur unterscheidet sich von der zweiten Kantenkontur. Durch die Verwendung von unterschiedlichen Kantenkonturen ist es möglich den Wirkungsgrad der hydrodynamischen Kupplung zu verbessern. Es können dadurch Strömungsverluste und Stoßverluste reduziert werden. Insbesondere ist es möglich die im Betrieb entstehenden Geräusche zu reduzieren.

In einer vorteilhaften Ausführungsform ist vorgesehen, dass alle Schaufeln eines Schaufelrades einen ersten und einen zweiten Abschnitt aufweisen. Vorzugsweise ist der erste Abschnitt bei allen Schaufeln an derselben Position und vorzugsweise mit identischer Erstreckung ausgebildet. So kann sich z.B. der erste Abschnitt über mindestens ein Drittel, vorzugsweise über die Hälfte, der Begrenzungskante erstrecken.

In einer vorteilhaften Weiterbildung ist vorgesehen, dass zumindestens das Pumpenrad Schaufeln mit einer Begrenzungskante mit einem ersten und einem zweiten Abschnitt aufweist. Vorzugsweise ist der erste Abschnitt bei allen Schaufeln in Bezug auf die radiale Anordnung bei der jeweiligen Begrenzungskante identisch. Dadurch kann ein gleichmäßiges Strömungsbild erreicht werden. In einer bevorzugten Ausführungsform ist vorgesehen, dass auch das Turbinenrad Schaufeln mit einem ersten und einem zweiten Abschnitt aufweist. Vorzugsweise weisen alle Schaufeln des Turbinenrades eine identische Ausgestaltung der Begrenzungskante auf.

In einer vorteilhaften Ausgestaltung ist vorgesehen, dass die erste Kantenkontur eine rundere Kantenkontur im Vergleich zur zweiten Kantenkontur aufweist. Durch die gerundete Kantenkontur können Verwirbelungen des Betriebsmediums reduziert werden, was zur Steigerung des Wirkungsgrades beiträgt. Die gerundete Vorderkante zeichnet sich durch geringe Einströmverluste, Stoßverluste und Strömungswiderstand aus.

Eine gerundete Kantenkontur kann durch eine Kantenkontur mit Tropfenform, durch eine kleine Verrundung mit anschließender Schräge oder eine Verrundung gebildet sein.

In einer weiteren Ausführungsform ist vorgesehen, dass der zweite Abschnitt mit der zweiten Kantenkontur eine scharfkantige Kantenkontur aufweist. Dadurch erfolgt im Vergleich zur gerundeten Kantenkontur eine geringere Umlenkung des Betriebsmediums. Eine scharfkantige Begrenzungskante kann einfach durch überdrehen der Schaufel in dem vorbestimmten Abschnitt der Begrenzungskante hergestellt werden. Üblicherweise werden die Schaufeln als Gussteil hergestellt. Durch Vorhalten einer Bearbeitungszugabe kann die Tiefe der Schaufel im eingebauten Zustand erhalten bleiben.

Bei einer scharfkantigen Kantenkontur bildet die Vorderkante eine rechtwinklige Fläche radial zur Drehachse. Eine derartige Vorderkante kann durch überdrehen hergestellt werden.

In einer vorteilhaften Weiterbildung ist vorgesehen, dass eine mit einem ersten und einem zweiten Abschnitt versehene Schaufel den zweiten Abschnitt in dem Bereich der Schaufeln aufweist, in dem das Betriebsmedium aus der jeweiligen Schaufel im Betrieb austritt.

Der Bereich, in dem das Betriebsmedium während der Anfahrphase oder im kontinuierlichen Betrieb aus dem Pumpenrad austritt verändert sich.

Im Nennbetrieb ist zur Übertragung des Drehmomentes, bedingt durch die Funktionsweise der Turbokupplung, ein Nennschlupf zwischen Pumpen- und Turbinenrad vorhanden. Vorzugsweise ist im Betrieb bei Erreichen des Nennschlupfes der Bereich, in dem das Betriebsmedium ausströmt, scharfkantig ausgebildet und der Bereich, in dem das Betriebsmedium einströmt, verrundet ausgebildet.

In einer weiteren Ausführungsform ist vorgesehen, dass eine mit einem ersten und einen zweiten Abschnitt versehene Schaufel den ersten Abschnitt in dem Bereich der Schaufeln aufweist, in dem das Strömungsmedium in die jeweilige Schaufel im Betrieb eintritt. Vorzugsweise ist die Ausbildung des ersten Abschnittes auf den Nennschlupfbetrieb nach der Anlaufphase abgestellt.

Es wird vorzugsweise nur auf den Nennschlupf optimiert. D.h. bei durchströmten Kupplungen ist der Arbeitsraum im Nennbetrieb immer voll. Bei konstant gefüllten Kupplungen, die mit unterschiedlicher Füllung im Nennschlupfbereich fahren können, wäre ein Kompromiss zwischen allen gewählten Füllungen zu suchen.

In einer bevorzugten Ausführungsform ist vorgesehen, dass die gegenüberliegenden Kantenkonturen der Schaufeln des Pumprades und des Turbinenrades jeweils unterschiedliche Kantenkonturen aufweisen. Besonders bevorzugt ist die Begrenzungskante in dem Bereich, in dem das Betriebsmedium austritt scharfkantig ausgebildet und in dem Bereich eines Schaufelrades in dem es in das Schaufelrad eintritt gerundet ausgeführt.

Danach weisen die Schaufeln des Pumpenrades radial außen den zweiten mit einer scharfkantigen Kantenkontur versehenen Abschnitt auf. Radial innerhalb des Abschnittes mit der scharfkantigen Kantenkontur ist der erste Abschnitt mit gerundeten Schaufelkanten angeordnet.

In einer vorteilhaften Ausführungsform ist vorgesehen das die Begrenzungskante der Schaufeln des Turbinenrades komplett gerundet ausgebildet sind. Dadurch wird die Herstellung des Turbinenrades vereinfacht, was sich vorteilhaft auf die Herstellungskosten auswirkt. Vorteilhafter Weise sind alle Schaufeln des Turbinenrades mit identischer Kantenkontur ausgebildet.

In einer bevorzugten Ausführungsform ist vorgesehen, dass die Schaufeln des Turbinenrades radial außen mit einer gerundeten Kantenkontur versehen sind und radial innerhalb dieses Abschnittes einen Abschnitt mit einer scharfkantigen Schaufelkante aufweisen.

In einer bevorzugten Ausführungsform ist vorgesehen, dass sich der scharfkantige Bereich und der verrundete Bereich der Schaufel über die gesamte Begrenzungskante erstreckt. Die Begrenzungskante der Schaufel ist somit entweder scharfkantig oder verrundet ausgebildet. Jede Schaufel umfasst vorzugsweise maximal einen ersten Bereich mit einer ersten Kantenkontur und einen zweiten Bereich mit einer zweiten Kantenkontur. Durch den ersten und den zweiten Bereich zusammen wird die gesamte Begrenzungskante gebildet.

Verfahren zum Betrieb einer hydrodynamischen Kupplung mit einem Pumpenrad und einem Turbinenrad, wobei das Pumpenrad Pumpenradschaufeln und das Turbinenrad Turbinenradschaufeln aufweist. Zumindestens einige, vorzugsweise alle Pumpenradschaufeln sind mit einem ersten und einem zweiten Abschnitt versehen. Die erste Kantenkontur weist im Vergleich zur zweiten Kantenkontur eine rundere Form als Kantenkontur auf. Im Betrieb wird das Pumpenrad angetrieben. Das Betriebsmedium wird durch das Pumpenrad beschleunigt und tritt aus dem Pumpenrad heraus. In diesem Bereich sind die Schaufeln des Pumpenrades mit einer kantigen Kontur versehen. Dadurch erfährt das Betriebsmedium eine geringere Ablenkung. Anschließend tritt das Betriebsmedium in das Turbinenrad unter verringerten Turbulenzen und Stoßverlusten über eine gerundet ausgebildete Kante der Turbinenradschaufeln in das Turbinenrad ein. Das Betriebsmedium überträgt eine Antriebskraft auf das Turbinenrad. Zumindestens in dem Bereich, in dem das Betriebsmedium in das Turbinenrad eintritt.

Bei einem bevorzugten Verfahren werden die Strömungsverluste bei dem Übertritt von dem Turbinenrad in das Pumpenrad reduziert in dem über eine gerundete Kantenkontur der Schaufeln des Turbinenrades das Betriebsmedium mit einer geringen Ablenkung durch eine scharfkantige Begrenzungskante des Turbinenrades in Richtung Pumpenrad gelenkt wird.

Die erfindungsgemäße Lösung wird nachfolgend anhand einer Figur erläutert. Darin ist im Einzelnen folgendes dargestellt:
Es zeigt:
- Fig. 1:: Hydrodynamische Kupplung;
- Fig. 2:: Pumpenrad mit Pumpenradschaufeln mit gerundeter und scharfkantiger Begrenzungskante;

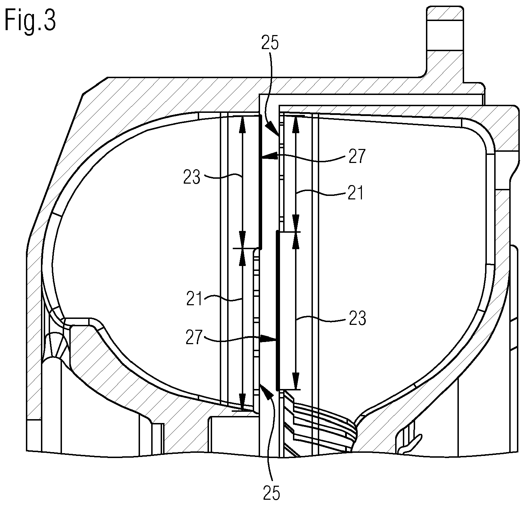

- Fig. 3:: Pumpenrad und Turbinenrad mit abschnittsweise gerundeten und scharfkantigen Begrenzungskanten.

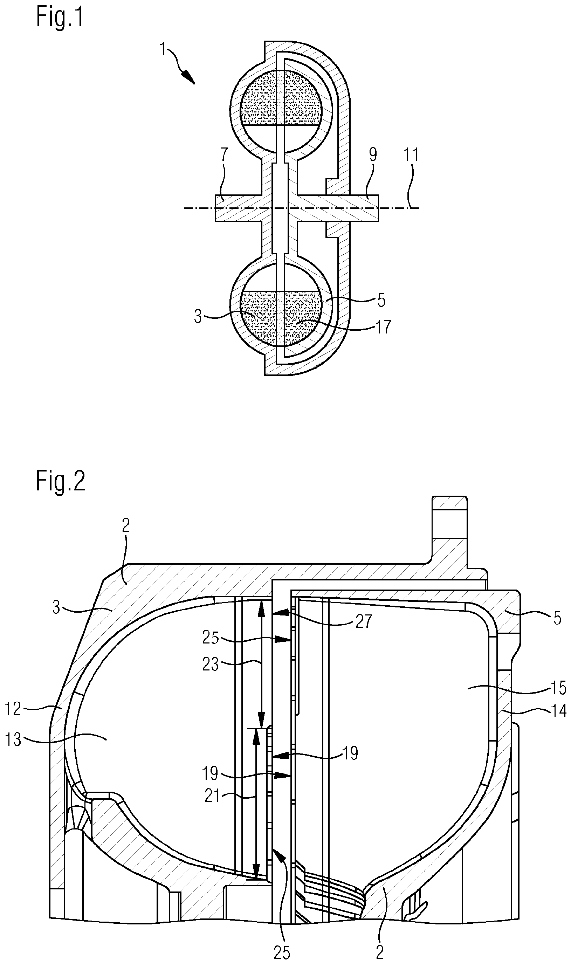

In Figur 1 ist eine hydrodynamische Kupplung gezeigt. Die hydrodynamische Kupplung weist ein Pumpenrad 3 und ein Turbinenrad 5 auf. Das Pumpenrad 3 ist mit einer Antriebsachse 7 verbunden und ist drehbar gelagert. Das Pumpenrad weist einen Pumpenradgrundkörper 12 auf. Mit dem Pumpenradgrundkörper 12 sind Schaufeln 13 des Pumpenrades 3 fest verbunden. Die Schaufeln 13 des Pumpenrades 3 weisen eine offene Begrenzungskante 19 auf. Die offene Begrenzungskante 19 der Pumpenradschaufeln 13 ist der offenen Begrenzungskante 19 der Turbinenradschaufeln 25 zugewandt. Die Turbinenradschaufeln 25 sind mit einem Turbinenradgrundkörper verbunden. Der Grundkörper 14 des Turbinenrades 5 ist mit einer Abtriebswelle fest verbunden. Die Abtriebswelle fällt mit der Mittenachse 11 zusammen. Sowohl das Pumpenrad 3 als auch das Turbinenrad 5 sind um diese Mittenachse 11 drehbar gelagert. Schematisch ist das Betriebsmedium 17 im Betrieb dargestellt, das durch die Rotation des Pumpenrades 3 und des Turbinenrades 5 sich radial außen befindet.

Aus Figur 2 sind die Pumpenradschaufeln 13 und die Turbinenradschaufeln detailliert dargestellt. Die Begrenzungskante 19 der Pumpenradschaufeln 13 ist in einen ersten Abschnitt 21 und einen zweiten Abschnitt 23 unterteilt. Der zweite Abschnitt 23 ist radial außen in Bezug auf die Antriebsachse angeordnet. Die Begrenzungskante 19 weist in diesem zweiten Abschnitt eine scharfkantige Kantenkontur 27 auf. Der erste Abschnitt 21 ist radial innerhalb des zweiten Abschnittes 23 in Bezug auf die Antriebsachse 7 angeordnet. In dem ersten Abschnitt 21 ist die Begrenzungskante 19 der Pumpenradschaufeln 13 mit einer gerundeten Kantenkontur 25 ausgebildet. In dem dargestellten Ausführungsbeispiel ist die Begrenzungskante der Pumpenradschaufeln 13 etwa zur Hälfte in den ersten 21 und den zweiten Abschnitt 23 unterteilt. Die Erstreckung des ersten Abschnittes 21 und des zweiten Abschnittes 23 ist aber in Abhängigkeit von dem Füllgrad der hydrodynamischen Kupplung zu wählen, wie noch nachfolgend erläutert wird.

Durch eine scharfkantige Kantenkontur 27 der Begrenzungskante 19 wird das Betriebsmedium 17 weniger abgelenkt als bei einer gerundeten Kantenkontur 25 der Begrenzungskante 19. Bei der gerundeten Kantenkontur 25 folgt das Betriebsmedium 17 der Kontur der Begrenzungskante 19 und erfährt dadurch eine größere Ablenkung in Umfangsrichtung. Die Umfangsrichtung ist dabei durch die Bewegungsrichtung des Pumpenrades 3 festgelegt. Das Pumpenrad 3 dreht sich in Richtung der Umfangsrichtung.

Die Turbinenradschaufeln 15 sind mit einer gerundeten Kantenkontur 25 ausgebildet. Die gerundete Kantenkontur zeichnet sich durch einen geringen Strömungswiderstand aus.

Im Folgenden wird die Betriebsweise der in Figur 2 dargestellten hydrodynamischen Kupplung näher erläutert. Die Antriebsachse 7 wird durch einen nicht dargestellten Antrieb/ Motor angetrieben. Durch die Rotation der Antriebsachse 7 rotiert das Pumpenrad 3. Das in der hydrodynamischen Kupplung zwischen den Schaufeln 13 des Pumpenrades 3 befindliche Betriebsmedium 17 wird dadurch beschleunigt. Das Betriebsmedium 17 tritt aus dem Pumpenrad 3 heraus und tritt in das Turbinenrad 5 ein. Durch das Betriebsmedium 17 wird ein Drehmoment auf das Turbinenrad 5 übertragen. Dadurch wird das Turbinenrad 5 beschleunigt und die Abtriebsachse 9, die als Welle ausgebildet ist, wird in Rotation versetzt. Das Betriebsmedium 19 tritt wieder aus dem Turbinenrad 5 heraus und tritt wieder in das Pumpenrad 3 ein. Durch das Pumpenrad 3 erfährt das Betriebsmedium 19 wieder eine Beschleunigung. Durch diesen Kreislauf erfolgt die Drehmomentübertragung.

Als Betriebsmedium 19 sind in der Regel Flüssigkeiten, wie z.B. Öl oder Wasser, eingesetzt. Es kann aber auch ein Gas eingesetzt werden. Bei den hier dargestellten Ausführungsbeispielen sind Ausführungsvarianten mit konstanter Füllung und lediglich einem Pumpenrad 3 und einem Turbinenrad 5 gezeigt. Die Erfindung kann ebenfalls auf Doppelkreisläufe angewendet werden. Weiterhin kann die Erfindung aber auch bei einer hydrodynamischen Kupplung mit variabler Füllung und auch bei hydrodynamischen Kupplungen bzw. Wandlern, die in dem hydrodynamischen Kreislauf neben dem Pumpenrad und Turbinenrad weitere Elemente, wie z.B. ein Leitrad, umfassen, eingesetzt werden.

### Bezugszeichenliste:

- 1: Hydrodynamische Kupplung
- 2: Schaufelrad
- 3: Pumpenrad
- 5: Turbinenrad
- 7: Antriebsachse
- 9: Abtriebsachse
- 11: Mittelachse
- 12: Grundkörper des Pumpenrades
- 13: Pumpenradschaufel
- 14: Grundkörper des Turbinenrades
- 15: Turbinenradschaufel
- 17: Betriebsmedium
- 19: Begrenzungskante
- 21: erster Abschnitt
- 23: zweiter Abschnitt
- 25: erste Kantenkontur, gerundete Kantenkontur
- 27: zweite Kantenkontur, scharfkantige Kantenkontur

## Patentansprüche

1. Hydrodynamische Kupplung (1) mit einem Pumpenrad (3) als erstes Schaufelrad (2) und mit einem Turbinenrad (5) als zweites Schaufelrad (2), wobei das Pumpenrad (3) mit einem Grundkörper des Pumpenrades (12) verbundene Pumpenradschaufeln (13) aufweist und wobei das Turbinenrad (5) mit einem Grundkörper des Turbinenrades (14) verbundene Turbinenradschaufeln (15) aufweist, wobei das Pumpenrad (3) und das Turbinenrad (5) jeweils um eine Mittelachse (11) drehbar gelagert sind und wobei die Schaufeln des Pumpenrades (13) Begrenzungskanten (19) aufweisen, die den Begrenzungskanten (19) der Schaufeln des Turbinenrades zugewandt angeordnet sind, derart, **dass** von einem Schaufelrad (2) mindestens eine der Schaufeln eine Begrenzungskante (19) aufweist, wobei die Begrenzungskante (19) in einen ersten Abschnitt (21) mit einer ersten Kantenkontur (25) und einen zweiten Abschnitt (23) mit einer zweiten Kantenkontur (27) unterteilt ist und wobei die erste (25) und die zweite Kantenkontur (27) unterschiedlich sind und **dadurch gekennzeichnet, dass** der zweite Abschnitt (23) mit der zweiten Kantenkontur (27) eine scharfkantige Kantenkontur aufweist.

2. Hydrodynamische Kupplung nach Anspruch 1,
**dadurch gekennzeichnet,**
**dass** bei einer scharfkantige Kantenkontur eine rechtwinklige Fläche, wobei die Fläche radial zur Drehachse angeordnet ist, die Vorderkante der Kantenkontur bildet. [S. 5, Z. 1-3]

3. Hydrodynamische Kupplung nach Anspruch 1 oder 2,
**dadurch gekennzeichnet,**
**dass** das Pumpenrad (3) und das Turbinenrad (5) Schaufeln mit einer Begrenzungskante (19) mit einem ersten (21) und einem zweiten Abschnitt (23) aufweisen.

4. Hydrodynamische Kupplung nach einem der vorhergehenden Ansprüche,
**dadurch gekennzeichnet,**
**dass** die erste Kantenkontur (25) eine rundere Kantenkontur im Vergleich zur zweiten Kantenkontur (27) aufweist.

5. Hydrodynamische Kupplung nach Anspruch 2,
**dadurch gekennzeichnet,**
**dass** die zweite scharfkantige Kantenkontur (27) durch Überdrehen herstellbar ist.

6. Hydrodynamische Kupplung nach einem der vorhergehenden Ansprüche,
**dadurch gekennzeichnet,**
**dass** eine mit einem ersten (21) und einem zweiten Abschnitt (23) versehene Schaufel (13, 15) den zweiten Abschnitt in dem Bereich der Schaufeln aufweist, in dem das Betriebsmedium (17) aus der jeweiligen Schaufel (13, 15) im Betrieb austritt.

7. Hydrodynamische Kupplung nach einem der vorhergehenden Ansprüche,
**dadurch gekennzeichnet,**
**dass** eine mit einem ersten (21) und einem zweiten Abschnitt (23) versehene Schaufel (13, 15) den ersten Abschnitt (21) in dem Bereich der Schaufeln (13, 15) aufweist, in dem das Betriebsmedium (17) in die jeweilige Schaufel (13, 15) im Betrieb eintritt.

8. Hydrodynamische Kupplung nach einem der Ansprüche 4 oder 5,
**dadurch gekennzeichnet,**
**dass** im Nennbetrieb der zweite Abschnitt , in dem das Betriebsmedium ausströmt, scharfkantig ausgebildet und erste Abschnitt, in dem das Betriebsmedium einströmt, verrundet ausgebildet. [S. 5, Z. 13-18]

9. Hydrodynamische Kupplung nach einem der vorhergehenden Ansprüche,
**dadurch gekennzeichnet,**
**dass** die gegenüberliegenden Kantenkonturen (25, 27) der Schaufeln (13, 15) des Pumpenrades (3) und des Turbinenrades (5) jeweils unterschiedliche Kantenkonturen (25, 27) aufweisen.

10. Hydrodynamische Kupplung nach einem der vorhergehenden Ansprüche,
**dadurch gekennzeichnet,**
**dass** Schaufeln des Pumpenrades (13) radial außen den zweiten mit einer scharfkantigen Kantenkontur (27) versehenen Abschnitt (23) aufweisen und radial innerhalb dieses Abschnittes einen ersten mit gerundeten Schaufelkanten (25) versehenen Abschnitt (21) aufweisen.

11. Hydrodynamische Kupplung nach einem der vorhergehenden Ansprüche,
**dadurch gekennzeichnet,**
**dass** das Turbinenrad (5) Schaufeln (15) mit einer gerundeten Schaufelkante (25) aufweist.

12. Hydrodynamische Kupplung nach einem der vorhergehenden Ansprüche,
**dadurch gekennzeichnet,**
**dass** Schaufeln des Turbinenrades (15) radial außen mit einer gerundeten Kantenkontur (21) versehen sind und radial innerhalb dieses Abschnittes einen Abschnitt mit einer scharfkantigen Schaufelkante (27) aufweisen.

13. Schaufel für eine hydrodynamische Kupplung nach einem der vorhergehenden Ansprüche,
**dadurch gekennzeichnet,**
**dass** die Schaufel (13, 15) eine Schaufelkante (25,27) aufweist, die einen ersten Abschnitt (21) mit einer gerundete Kantenkontur (25) und eine zweiten Abschnitt (23) mit einer im Vergleich zur ersten Kantenkontur scharfkantigen Kantenkontur (27) aufweist.

14. Hydrodynamische Kupplung nach einem der vorhergehenden Ansprüche,
**dadurch gekennzeichnet,**
**dass** sich der scharfkantige Bereich und der verrundete Bereich der Schaufel (13, 15) über die gesamte Begrenzungskante (19) erstreckt.

15. Verfahren zum Betrieb einer hydrodynamischen Kupplung (1) nach einem der vohergehenden Ansprüche mit einem Pumpenrad (3) und einem Turbinenrad (5), wobei das Pumpenrad (3) Pumpenradschaufeln (13) und das Turbinenrad (5) Turbinenradschaufeln (15) aufweist und zumindestens einige Pumpenradschaufeln (13) mit einem ersten (21) und einem zweiten Abschnitt (23) mit einer ersten (25) und einer zweiten Kantenkontur (27) versehen sind, wobei die erste Kantenkontur (25) im Vergleich zur zweiten Kantenkontur (27) eine rundere Kontur aufweist,
**dadurch gekennzeichnet,**
**dass**
das durch das angetriebene Pumpenrad (3) beschleunigte Betriebsmedium (19) aus dem Pumpenrad (3) zur Vermeidung von Strömungsverlusten im Vergleich zu einem Austritt über eine gerundete Kantenkontur mit einer geringen Ablenkung durch die zweite kantige [S. 7, Z.6] Kantenkontur (27) aus dem Pumpenrad (3) heraustritt und anschließend in das Turbinenrad (5) über eine gerundete Kantenkontur zur Reduzierung von Strömungsverlusten hineingeleitet wird, wobei das Betriebsmedium (19) eine Antriebskraft auf das Turbinenrad (5) überträgt.

## Claims

1. Hydrodynamic coupling (1) having a pump impeller (3) as first blade wheel (2) and having a turbine wheel (5) as second blade wheel (2), wherein the pump impeller (3) has pump-impeller blades (13) connected to a main body (12) of the pump impeller and wherein the turbine wheel (5) has turbine-wheel blades (15) connected to a main body (14) of the turbine wheel, wherein the pump impeller (3) and the turbine wheel (5) are each mounted so as to be rotatable about a central axis (11) and wherein the blades (13) of the pump impeller have boundary edges (19) which are arranged in a manner facing the boundary edges (19) of the blades of the turbine wheel,
**such**
that at least one of the blades of one blade wheel (2) has a boundary edge (19), wherein the boundary edge (19) is subdivided into a first portion (21) with a first edge contour (25) and a second portion (23) with a second edge contour (27), and wherein the first (25) and the second edge contour (27) are different and **characterized in that** the second portion (23) with the second edge contour (27) has a sharp-edged edge contour.

2. Hydrodynamic coupling according to Claim 1,
**characterized**
**in that,** in the case of a sharp-edge contour, a right-angled face, wherein the face is radial with respect to the axis of rotation, forms the front edge of the edge contour.

3. Hydrodynamic coupling according to claim 1 or 2,
**characterized**
**in that** the pump impeller (3) and the turbine wheel (5) have blades having a boundary edge (19) with a first (21) and a second portion (23).

4. Hydrodynamic coupling according to one of the preceding claims,
**characterized**
**in that** the first edge contour (25) has a more rounded edge contour than the second edge contour (27).

5. Hydrodynamic coupling according to Claim 2,
**characterized**
**in that** the second sharp-edged edge contour (27) can be produced by lathing.

6. Hydrodynamic coupling according to one of the preceding claims,
**characterized**
**in that** a blade (13, 15) provided with a first (21) and a second portion (23) has the second portion in the region of the blades in which the operating medium (17) passes out of the respective blade (13, 15) during operation.

7. Hydrodynamic coupling according to one of the preceding claims,
**characterized**
**in that** a blade (13, 15) provided with a first (21) and a second portion (23) has the first portion (21) in the region of the blades (13, 15) in which the operating medium (17) passes into the respective blade (13, 15) during operation.

8. Hydrodynamic coupling according to either of Claims 4 and 5,
**characterized**
**in that,** during nominal operation, the second portion, in which the operating medium flows out, is formed in a sharp-edged manner and the first portion, in which the operating medium flows in, is formed in a rounded manner.

9. Hydrodynamic coupling according to one of the preceding claims,
**characterized**
**in that** the opposing edge contours (25, 27) of the blades (13, 15) of the pump impeller (3) and of the turbine wheel (5) each have different edge contours (25, 27).

10. Hydrodynamic coupling according to one of the preceding claims,
**characterized**
**in that** blades of the pump impeller (13) have, radially on the outside, the second portion (23) provided with a sharp-edged edge contour (27) and, radially on the inside of this portion, a first portion (21) provided with rounded blade edges (25).

11. Hydrodynamic coupling according to one of the preceding claims,
**characterized**
**in that** the turbine wheel (5) has blades (15) with a rounded blade edge (25).

12. Hydrodynamic coupling according to one of the preceding claims,
**characterized**
**in that** blades of the turbine wheel (15) are provided, radially on the outside, with a rounded edge contour (21) and, radially on the inside of this portion, have a portion with a sharp-edged blade edge (27).

13. Blade for a hydrodynamic coupling according to one of the preceding claims,
**characterized**
**in that** the blade (13, 15) has a blade edge (25, 27) which has a first portion (21) with a rounded edge contour (25) and a second portion (23) with a sharp-edged edge contour (27) compared with the first edge contour.

14. Hydrodynamic coupling according to one of the preceding claims,
**characterized**
**in that** the sharp-edged region and the rounded region of the blade (13, 15) extend over the entire boundary edge (19).

15. Method for operating a hydrodynamic coupling (1) according to one of the preceding claims having a pump impeller (3) and a turbine wheel (5), wherein the pump impeller (3) has pump-impeller blades (13) and the turbine wheel (5) has turbine-wheel blades (15) and at least some pump-impeller blades (13) are provided with a first (21) and a second portion (23) having a first (25) and a second edge contour (27), wherein the first edge contour (25) has a more rounded contour than the second edge contour (27),
**characterized**
**in that,**
in order to avoid flow losses, the operating medium (19) accelerated by the driven pump impeller (3) out of the pump impeller (3) passes out of the pump impeller (3) with a smaller deflection by the second edged edge contour (27) compared with passing out via a rounded edge contour, and is subsequently guided into the turbine wheel (5) via a rounded edge contour in order to reduce flow losses, wherein the operating medium (19) transmits a driving force to the turbine wheel (5) .

## Revendications

1. Coupleur hydrodynamique (1) comprenant une roue de pompe (3) en tant que première roue à aubes (2) et une roue de turbine (5) en tant que deuxième roue à aubes (2), dans lequel la roue de pompe (3) comprend des aubes (13) de roue de pompe reliées à un corps de base de la roue de pompe (12), et dans lequel la roue de turbine (5) comprend des aubes (15) de roue de turbine reliées à un corps de base de la roue de turbine (14), dans lequel la roue de pompe (3) et la roue de turbine (5) sont respectivement montées de manière à pouvoir tourner autour d'un axe médian (11), et dans lequel les aubes de la roue de pompe (13) comprennent des bords de délimitation (19) qui sont disposés de manière tournée vers les bords de délimitation (19) des aubes de la roue de turbine, de telle sorte qu'au moins l'une des aubes d'une roue à aubes (2) comprend un bord de délimitation (19), dans lequel le bord de délimitation (19) est divisé en une première partie (21) dotée d'un premier contour de bord (25) et une deuxième partie (23) dotée d'un deuxième contour de bord (27), et dans lequel le premier (25) et le deuxième contour de bord (27) sont différents, et **caractérisé en ce que** la deuxième partie (23) dotée du deuxième contour de bord (27) présente un contour de bord anguleux.

2. Coupleur hydrodynamique selon la revendication 1,
**caractérisé en ce que**
dans le cas d'un contour de bord anguleux, une surface rectangulaire forme le bord avant du contour de bord, la surface étant disposée radialement par rapport à l'axe de rotation. [p. 5, 1. 1-3]

3. Coupleur hydrodynamique selon la revendication 1 ou 2,
**caractérisé en ce que**
la roue de pompe (3) et la roue de turbine (5) comprennent des aubes dotées d'un bord de délimitation (19) comprenant une première (21) et une deuxième partie (23).

4. Coupleur hydrodynamique selon l'une des revendications précédentes,
**caractérisé en ce que**
le premier contour de bord (25) présente un contour de bord plus rond que le deuxième contour de bord (27).

5. Coupleur hydrodynamique selon la revendication 2,
**caractérisé en ce que**
le deuxième contour de bord anguleux (27) peut être produit par finition au tour.

6. Coupleur hydrodynamique selon l'une des revendications précédentes,
**caractérisé en ce**
**qu'**une aube (13, 15) dotée d'une première (21) et d'une deuxième partie (23) comprend la deuxième partie dans la région des aubes dans laquelle le fluide de travail (17) sort de l'aube respective (13, 15) lors du fonctionnement.

7. Coupleur hydrodynamique selon l'une des revendications précédentes,
**caractérisé en ce**
**qu'**une aube (13, 15) dotée d'une première (21) et d'une deuxième partie (23) comprend la première partie (21) dans la région des aubes (13, 15) dans laquelle le fluide de travail (17) entre dans l'aube respective (13, 15) lors du fonctionnement.

8. Coupleur hydrodynamique selon la revendication 4 ou 5,
**caractérisé en ce**
**qu'**en fonctionnement nominal, la deuxième partie, dans laquelle le fluide de travail est évacué, est formée de manière anguleuse et la première partie, dans laquelle le fluide de travail afflue, est formée de manière arrondie. [p. 5, 1. 13-18]

9. Coupleur hydrodynamique selon l'une des revendications précédentes,
**caractérisé en ce que**
les contours de bord (25, 27) en regard des aubes (13, 15) de la roue de pompe (3) et de la roue de turbine (5) présentent respectivement des contours de bord (25, 27) différents.

10. Coupleur hydrodynamique selon l'une des revendications précédentes,
**caractérisé en ce que**
des aubes de la roue de pompe (13) comprennent, radialement à l'extérieur, la deuxième partie (23) dotée d'un contour de bord anguleux (27) et, radialement à l'intérieur de cette partie, une première partie (21) dotée de bords d'aube arrondis (25).

11. Coupleur hydrodynamique selon l'une des revendications précédentes,
**caractérisé en ce que**
la roue de turbine (5) comprend des aubes (15) dotées d'un bord d'aube arrondi (25).

12. Coupleur hydrodynamique selon l'une des revendications précédentes,
**caractérisé en ce que**
des aubes de la roue de turbine (15) sont dotées, radialement à l'extérieur, d'un contour de bord arrondi (21) et comprennent, radialement à l'intérieur de cette partie, une partie dotée d'un bord d'aube anguleux (27) .

13. Aube pour un coupleur hydrodynamique selon l'une des revendications précédentes,
**caractérisée en ce que**
l'aube (13, 15) présente un bord d'aube (25, 27) qui comprend une première partie (21) dotée d'un contour de bord arrondi (25) et une deuxième partie (23) dotée d'un contour de bord anguleux (27) par comparaison avec le premier contour de bord.

14. Coupleur hydrodynamique selon l'une des revendications précédentes,
**caractérisé en ce que**
la région anguleuse et la région arrondie de l'aube (13, 15) s'étendent sur tout le bord de délimitation (19) .

15. Procédé de fonctionnement d'un coupleur hydrodynamique (1) selon l'une des revendications précédentes, comprenant une roue de pompe (3) et une roue de turbine (5), dans lequel la roue de pompe (3) comprend des aubes (13) de roue de pompe et la roue de turbine (5) comprend des aubes (15) de roue de turbine, et au moins certaines aubes (13) de roue de pompe sont dotées d'une première (21) et d'une deuxième partie (23) comprenant un premier (25) et un deuxième contour de bord (27), dans lequel le premier contour de bord (25) présente un contour plus rond que le deuxième contour de bord (27),
**caractérisé en ce que**
le fluide de travail (19) accéléré par la roue de pompe entraînée (3) hors de la roue de pompe (3) sort de la roue de pompe (3) avec une faible déviation au moyen du deuxième contour de bord anguleux (27) [p.7, 1.6] par comparaison avec une sortie via un contour de bord arrondi pour éviter des pertes de flux, et est ensuite guidé à l'intérieur de la roue de turbine (5) via un contour de bord arrondi pour réduire des pertes de flux, le fluide de travail (19) transmettant une force d'entraînement à la roue de turbine (5).
